# EUROPEAN PATENT APPLICATION

(11) **EP 4 557 715 A1**
(43) Date of publication of application: **21.05.2025**
(21) Application number: 24210195.4
(22) Date of filing: 31.10.2024
(51) Int. Cl.: H04N 1/203, H04N 1/00, H04N 1/04, H04N 1/10, H04N 1/387, H04N 1/393

(54) **IMAGE READING DEVICE CAPABLE OF SUPPRESSING SITUATION WHERE IMAGE READ FROM DOUBLE-PAGE DOCUMENT SHEET BECOMES IMAGE UNTENDED BY USER, IMAGE FORMING APPARATUS, AND IMAGE READING METHOD**

(30) Priority: 16.11.2023 JP 2023194802
(71) Applicant: KYOCERA Document Solutions Inc., Osaka-shi, Osaka, 540-8585 (JP)
(72) Inventor: Yabuuchi, Yasuyuki, Osaka-shi, 540-8585 (JP)
(74) Representative: Plougmann Vingtoft a/s

(57) **Abstract**

An image reading device includes an output processing portion (34) which executes, when an instruction to read an image of a document sheet placed on a document sheet placing portion (211) is input, a cover portion (1) which covers the document sheet placing portion (211) is in an opened attitude, and a size of the document sheet has not been designated, first output processing for reading an image of a first region in the document sheet placing portion (211), correcting a tilt of each of page images included in a first image obtained by the reading, and clipping a document sheet region from the corrected first image and outputting it, and executes, when the size of the document sheet has been designated, second output processing for reading an image of a second region in the document sheet placing portion (211), that corresponds to the designated size, and outputting a second image obtained by the reading.

## Description

### BACKGROUND

The present disclosure relates to an image reading device, an image forming apparatus, and an image reading method.

There is known an image reading device including a document sheet placing portion such as contact glass on which a double-page document sheet such as a book is placed and a cover portion provided while being capable of changing its attitude between a closed attitude in which the cover portion covers the document sheet placing portion and an opened attitude in which the cover portion exposes the document sheet placing portion.

### SUMMARY

An image reading device according to an aspect of the present disclosure includes a document sheet placing portion, a cover portion, an acceptance processing portion, a determination processing portion, and an output processing portion. A document sheet is placed on the document sheet placing portion. The cover portion is provided while being capable of changing its attitude between a closed attitude in which the cover portion covers the document sheet placing portion and an opened attitude in which the cover portion exposes the document sheet placing portion. The acceptance processing portion accepts a designation operation for designating a size of the document sheet placed on the document sheet placing portion. The determination processing portion determines whether or not the size of the document sheet has been designated by the designation operation when an instruction to read an image of the document sheet placed on the document sheet placing portion is input and the cover portion is in the opened attitude. The output processing portion executes, when it is determined by the determination processing portion that the size of the document sheet has not been designated, first output processing for reading an image of a predetermined first region in the document sheet placing portion, correcting a tilt of each of page images included in a first image obtained by the reading, and clipping a document sheet region from the corrected first image and outputting the document sheet region, and executes, when it is determined by the determination processing portion that the size of the document sheet has been designated, second output processing for reading an image of a second region in the document sheet placing portion, that corresponds to the size designated by the designation operation, and outputting a second image obtained by the reading.

An image forming apparatus according to another aspect of the present disclosure includes the image reading device and an image forming portion. The image forming portion forms an image on a sheet based on an image read by the image reading device.

An image reading method according to another aspect of the present disclosure is executed in an image reading device including a document sheet placing portion on which a document sheet is placed and a cover portion provided while being capable of changing its attitude between a closed attitude in which the cover portion covers the document sheet placing portion and an opened attitude in which the cover portion exposes the document sheet placing portion, and includes an acceptance step, a determination step, and an output step. The acceptance step includes accepting a designation operation for designating a size of the document sheet placed on the document sheet placing portion. The determination step includes determining whether or not the size of the document sheet has been designated by the designation operation when an instruction to read an image of the document sheet placed on the document sheet placing portion is input and the cover portion is in the opened attitude. The output step includes executing, when it is determined by the determination step that the size of the document sheet has not been designated, first output processing for reading an image of a predetermined first region in the document sheet placing portion, correcting a tilt of each of page images included in a first image obtained by the reading, and clipping a document sheet region from the corrected first image and outputting the document sheet region, and executing, when it is determined by the determination step that the size of the document sheet has been designated, second output processing for reading an image of a second region in the document sheet placing portion, that corresponds to the size designated by the designation operation, and outputting a second image obtained by the reading.

This Summary is provided to introduce a selection of concepts in a simplified form that are further described below in the Detailed Description with reference where appropriate to the accompanying drawings. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

Fig. 1 is a diagram showing a configuration of an image forming apparatus according to an embodiment of the present disclosure;
Fig. 2 is a diagram showing configurations of an ADF and an image reading portion in the image forming apparatus according to the embodiment of the present disclosure;
Fig. 3 is a block diagram showing a system configuration of the image forming apparatus according to the embodiment of the present disclosure;
Fig. 4 is a diagram showing a double-page document sheet placed on first contact glass of the image forming apparatus according to the embodiment of the present disclosure; and
Fig. 5 is a flowchart showing an example of double-page document sheet reading processing executed in the image forming apparatus according to the embodiment of the present disclosure.

### DETAILED DESCRIPTION

Hereinafter, an embodiment of the present disclosure will be described with reference to the attached drawings. It is noted that the following embodiment is an example of embodying the present disclosure and does not limit the technical scope of the present disclosure.

### [Configuration of image forming apparatus 100]

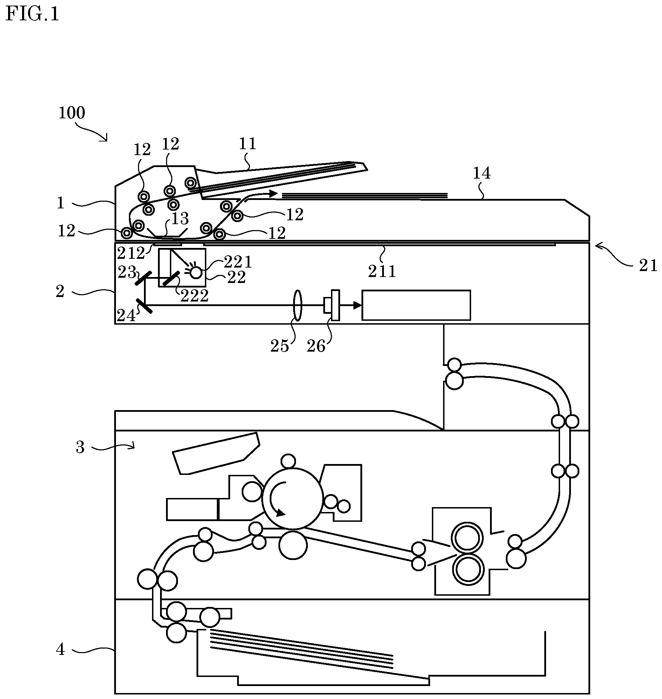

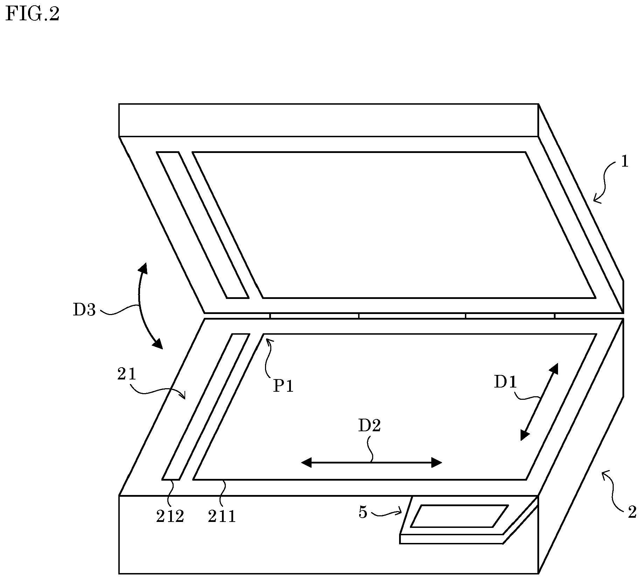

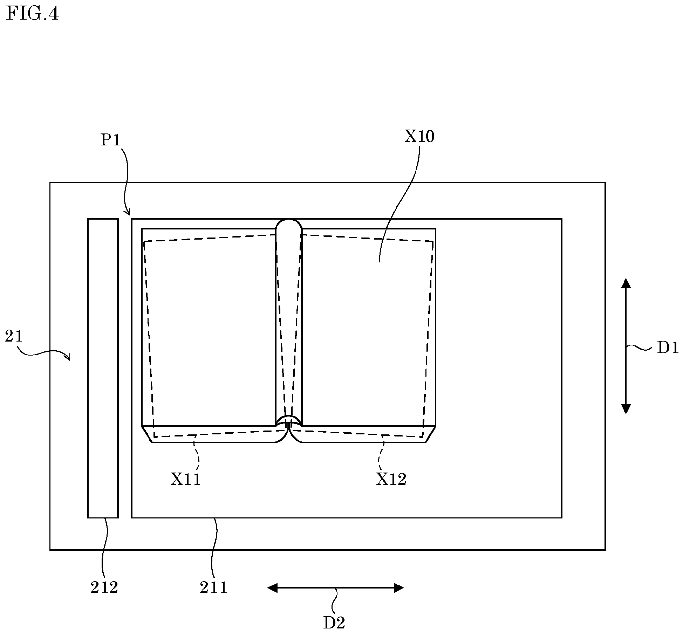

First, a configuration of an image forming apparatus 100 according to the embodiment of the present disclosure will be described with reference to Fig. 1 to Fig. 4. Herein, Fig. 1 is a cross-sectional view showing the configuration of the image forming apparatus 100. Further, Fig. 2 is a perspective view showing configurations of an ADF 1 and an image reading portion 2. Furthermore, Fig. 4 is a plan view showing the configuration of the image reading portion 2.

The image forming apparatus 100 is a multifunction peripheral having a plurality of functions such as a facsimile function and a copying function together with a scanning function for reading an image from a document sheet and a printing function for forming an image based on image data. It is noted that the image forming apparatus 100 may alternatively be a copying machine.

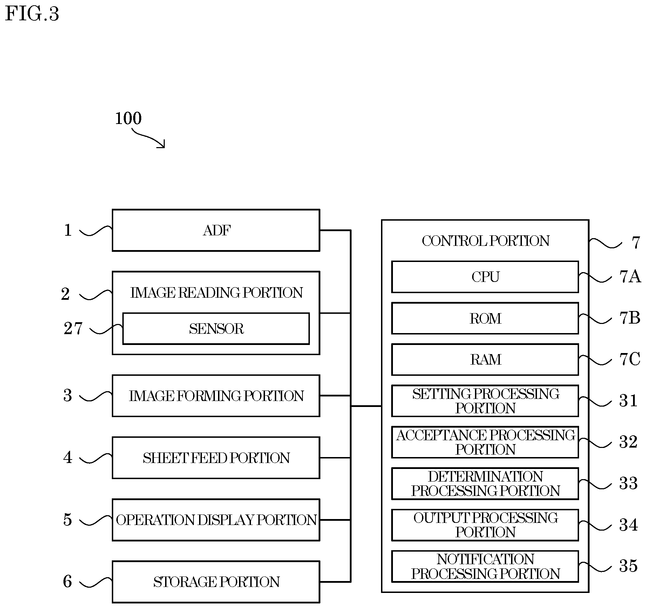

As shown in Fig. 1 and Fig. 3, the image forming apparatus 100 includes an ADF (Auto Document Feeder) 1, an image reading portion 2, an image forming portion 3, a sheet feed portion 4, an operation display portion 5, a storage portion 6, and a control portion 7.

The image forming portion 3 is capable of forming an image on a sheet based on image data. Specifically, the image forming portion 3 forms an image on a sheet using electrophotography. For example, the image forming portion 3 includes a photoconductor drum, a charging roller, a laser scanning unit, a developing device, a transfer roller, a cleaning device, a fixing device, and a sheet discharge tray. It is noted that the image forming portion 3 may form an image on a sheet using other image forming systems such as an inkjet system.

The sheet feed portion 4 supplies sheets to the image forming portion 3. The sheet feed portion 4 includes a sheet feed cassette and a plurality of conveying rollers.

The operation display portion 5 is a user interface of the image forming apparatus 100. The operation display portion 5 includes a display portion and an operation portion. The display portion displays various types of information in response to control instructions from the control portion 7. For example, the display portion is a liquid crystal display. The operation portion is used to input various types of information to the control portion 7 according to user operations. For example, the operation portion is a touch panel.

The storage portion 6 is a nonvolatile storage device. For example, the storage portion 6 is a nonvolatile memory such as a flash memory. It is noted that the storage portion 6 may alternatively be an SSD (Solid State Drive) or an HDD (Hard Disk Drive).

The control portion 7 collectively controls the image forming apparatus 100. As shown in Fig. 3, the control portion 7 includes a CPU 7A, a ROM 7B, and a RAM 7C. The CPU 7A is a processor which executes various types of calculation processing. The ROM 7B is a nonvolatile storage device in which information such as control programs for causing the CPU 7A to execute various types of processing is stored in advance. The RAM 7C is a volatile or nonvolatile storage device that is used as a temporary storage memory (working area) for the various types of processing to be executed by the CPU 7A. In the control portion 7, the CPU 7A executes the various control programs stored in advance in the ROM 7B. Thus, the control portion 7 collectively controls the image forming apparatus 100. It is noted that the control portion 7 may alternatively be configured by an electronic circuit such as an integrated circuit (ASIC). Alternatively, the control portion 7 may be a control portion provided separate from a main control portion which collectively controls the image forming apparatus 100.

The ADF 1 conveys a document sheet from which an image is to be read by the image reading portion 2. As shown in Fig. 1, the ADF 1 includes a document sheet tray 11, a plurality of conveying rollers 12, a document sheet guide 13, and a sheet discharge portion 14.

In the ADF 1, each of the conveying rollers 12 is driven by a driving force supplied from a motor (not shown). Thus, a document sheet placed on the document sheet tray 11 is conveyed along a document sheet conveying path formed inside the ADF 1. The document sheet conveyed along the document sheet conveying path is guided to an upper surface of second contact glass 212 of a document sheet table 21 (see Fig. 1) by the document sheet guide 13, and is then discharged to the sheet discharge portion 14.

The image reading portion 2 is capable of reading an image of a document sheet. Specifically, the image reading portion 2 is capable of reading an image of a document sheet using a CCD (Charge Coupled Device) system. As shown in Fig. 1 to Fig. 3, the image reading portion 2 includes the document sheet table 21, a reading unit 22, a mirror 23, a mirror 24, an optical lens 25, a CCD 26, and a sensor 27.

The document sheet table 21 is an upper surface portion of a box-like housing (see Fig. 2) which houses the respective constituent elements of the image reading portion 2. As shown in Fig. 1 and Fig. 2, the document sheet table 21 includes first contact glass 211 and the second contact glass 212. The first contact glass 211 is glass formed in a shape of a flat plate. A document sheet is placed on an upper surface of the first contact glass 211. In the image forming apparatus 100, the document sheet is placed while using a placement reference position P1 (see Fig. 2) on the upper surface of the first contact glass 211 as a reference. The placement reference position P1 is an upper left corner portion of the first contact glass 211 shown in Fig. 2. The document sheet to be placed on the first contact glass 211 includes a double-page document sheet X10 such as a book (see Fig. 4). Light emitted from the reading unit 22 toward the document sheet conveyed by the ADF 1 passes through the second contact glass 212. The first contact glass 211 is an example of a document sheet placing portion according to the present disclosure.

As shown in Fig. 1 and Fig. 2, the ADF 1 is provided on an upper side of the document sheet table 21. The ADF 1 is provided while being capable of changing its attitude between a closed attitude in which it covers the first contact glass 211 and an opened attitude in which it exposes the first contact glass 211. Specifically, the ADF 1 is supported by the document sheet table 21 while being rotatable in a rotation direction D3 shown in Fig. 2. Thus, the ADF 1 functions as a document sheet cover with respect to the document sheet placed on the first contact glass 211. The ADF 1 is an example of a cover portion according to the present disclosure.

As shown in Fig. 1, the reading unit 22 is provided below the first contact glass 211 and the second contact glass 212. The reading unit 22 is configured to be movable in a sub-scanning direction D2 shown in Fig. 2 by a movement mechanism (not shown) that includes a drive portion such as a stepping motor. As shown in Fig. 1, the reading unit 22 includes a light source 221 and a mirror 222.

The light source 221 is a plurality of LEDs arrayed along a main-scanning direction D1 shown in Fig. 2. The main-scanning direction D1 is a direction orthogonal to the sub-scanning direction D2. The light source 221 irradiates light corresponding to one line in the main-scanning direction D1 toward the first contact glass 211 or the second contact glass 212. The light emitted from the light source 221 passes through the first contact glass 211 or the second contact glass 212 to be irradiated onto the document sheet placed on the first contact glass 211 or the document sheet conveyed by the ADF 1. The mirror 222 reflects the light that has been emitted from the light source 221 and reflected by the document sheet toward the mirror 23.

In the image reading portion 2, when an image is read from the document sheet placed on the first contact glass 211, the reading unit 22 is moved in the sub-scanning direction D2 by the movement mechanism. Thus, the light irradiated onto the document sheet from the light source 221 is scanned in the sub-scanning direction D2. In addition, in the image reading portion 2, when an image is read from the document sheet conveyed by the ADF 1, the reading unit 22 is moved to a position below the second contact glass 212 by the movement mechanism. Thus, the light emitted from the light source 221 passes through the second contact glass 212 to be irradiated onto the document sheet conveyed by the ADF 1.

The mirror 23 reflects the light reflected by the mirror 222 of the reading unit 22 toward the mirror 24. The mirror 24 reflects the light reflected by the mirror 23 toward the optical lens 25. The optical lens 25 collects the light reflected by the mirror 24 and causes the light to enter the CCD 26.

The CCD 26 is an image sensor that includes a plurality of photoelectric conversion elements arrayed along the main-scanning direction D1. The CCD 26 outputs electric signals corresponding to a light amount of received light. In the image reading portion 2, the light that has been emitted from the light source 221 and reflected by the document sheet enters the CCD 26 via the mirror 222, the mirror 23, the mirror 24, and the optical lens 25. Thus, analog electric signals corresponding to the image of the document sheet are output from the CCD 26. The analog electric signals output from the CCD 26 are converted into digital electric signals (image data) by an AFE (Analog Front End) circuit (not shown), and the digital electric signals are input to the control portion 7. The image data output from the image reading portion 2 is used for forming an image by the image forming portion 3.

It is noted that the image reading portion 2 may alternatively be a portion which reads an image of a document sheet using a CIS (Contact Image Sensor) system.

The sensor 27 is used for detecting an attitude of the ADF 1. For example, the sensor 27 is an electric circuit including a mechanical switch whose state changes between an on state and an off state according to a change of the attitude of the ADF 1. The sensor 27 outputs electric signals corresponding to the state of the mechanical switch. It is noted that the sensor 27 is not limited to the electric circuit including the mechanical switch and only needs to be a sensor capable of detecting a change of the attitude of the ADF 1.

Meanwhile, in the image forming apparatus 100, when the number of pages of the double-page document sheets X10 placed on the first contact glass 211 is large, it may be impossible to change the attitude of the ADF 1 from the opened attitude to the closed attitude. When an image of the double-page document sheet X10 is read in a state where the ADF 1 is in the opened attitude, a size of the double-page document sheet X10 may be erroneously detected due to light that enters the first contact glass 211 from outside, and an image including extra regions may be output.

Further, in the image forming apparatus 100, when the number of pages of the double-page document sheets X10 placed on the first contact glass 211 is large, each of a page X11 (see Fig. 4) and a page X12 (see Fig. 4) as a reading target, that come into contact with the first contact glass 211, may tilt. When an image of the double-page document sheet X10 is read in a state where the page X11 and the page X12 as the reading target, that come into contact with the first contact glass 211, are tilted, an image including two page images that are each tilted is output.

In contrast, in the image forming apparatus 100 according to the embodiment of the present disclosure, it is possible to suppress a situation where an image read from the double-page document sheet X10 becomes an image unintended by the user as will be described below.

### [Configuration of control portion 7]

Next, a configuration of the control portion 7 will be described with reference to Fig. 3.

As shown in Fig. 3, the control portion 7 includes a setting processing portion 31, an acceptance processing portion 32, a determination processing portion 33, an output processing portion 34, and a notification processing portion 35. A device including the ADF 1, the image reading portion 2, and the control portion 7 is an example of an image reading device according to the present disclosure.

Specifically, a double-page document sheet reading program for causing the CPU 7A of the control portion 7 to function as the respective processing portions described above is stored in advance in the ROM 7B of the control portion 7. Then, the CPU 7A of the control portion 7 executes the double-page document sheet reading program stored in the ROM 7B to thus function as the respective processing portions described above. It is noted that some or all of the processing portions included in the control portion 7 may be configured by an electronic circuit. Alternatively, the double-page document sheet reading program may be a program for causing a plurality of processors to function as the respective processing portions included in the control portion 7.

The setting processing portion 31 sets a function of the output processing portion 34 to be effective or ineffective according to a user operation.

For example, the setting processing portion 31 causes the operation display portion 5 to display a setting operation acceptance screen for accepting a setting operation for setting the function of the output processing portion 34 to be effective or ineffective according to a predetermined user operation made to the operation display portion 5. Then, the setting processing portion 31 sets the function of the output processing portion 34 to be effective or ineffective according to the setting operation accepted in the setting operation acceptance screen.

The acceptance processing portion 32 accepts a designation operation for designating a size of a document sheet placed on the first contact glass 211.

For example, when a predetermined user operation is made to the operation display portion 5, the acceptance processing portion 32 causes the operation display portion 5 to display a designation operation acceptance screen for accepting the designation operation, and accepts the designation operation.

In addition, when the designation operation is accepted, the acceptance processing portion 32 stores size information indicating the size of the document sheet designated by the designation operation in a predetermined specific storage area in the RAM 7C.

When an instruction to execute image reading processing for reading an image of a document sheet placed on the first contact glass 211 is input and the ADF 1 is in the opened attitude, the determination processing portion 33 determines whether or not the size of the document sheet has been designated by the designation operation.

For example, the determination processing portion 33 determines whether or not the ADF 1 is in the opened attitude using the sensor 27. In addition, the determination processing portion 33 determines that the size of the document sheet has been designated by the designation operation when the size information is stored in the specific storage area of the RAM 7C.

It is noted that the size information stored in the specific storage area of the RAM 7C only needs to be deleted when double-page document sheet reading processing to be described later ends.

When it is determined by the determination processing portion 33 that the size of the document sheet has not been designated, the output processing portion 34 executes first output processing. When it is determined by the determination processing portion 33 that the size of the document sheet has been designated, the output processing portion 34 executes second output processing.

Herein, the first output processing is processing of reading an image of a predetermined first region in the first contact glass 211, correcting a tilt of each of page images included in a first image obtained by the reading, and clipping a document sheet region from the corrected first image and outputting the document sheet region. In addition, the first output processing is processing of dividing the document sheet region clipped from the corrected first image into two and outputting them. For example, the first region is an entire region on the upper surface of the first contact glass 211.

Specifically, in the first output processing, the reading unit 22 is used to read the image of the first region in the first contact glass 211. Also in the first output processing, known edge detection processing is executed on the read first image so as to detect each of the page images included in the first image. Also in the first output processing, each of the page images is rotated so that short sides of each of the detected page images become parallel to the sub-scanning direction D2 (see Fig. 4). Also in the first output processing, a region configured by the two page images arranged along the sub-scanning direction D2 (the document sheet region) is clipped from the first image including the page images for each of which the tilt has been corrected (the corrected first image). Then, in the first output processing, the clipped document sheet region is divided at a center of the document sheet region in the sub-scanning direction D2 to be output.

Further, the second output processing is processing of reading an image of a second region in the first contact glass 211, that corresponds to the size designated by the designation operation, and outputting a second image obtained by the reading. In addition, the second output processing is processing of dividing the second image into two and outputting them.

Specifically, in the second output processing, the reading unit 22 is used to read the image of the second region in the first contact glass 211. Also in the second output processing, the read second image is divided at a center of the second image in the sub-scanning direction D2 to be output.

It is noted that the first region may be a partial region on the upper surface of the first contact glass 211. Further, in the first output processing, the document sheet region clipped from the corrected first image may be output without being divided into two. Furthermore, in the second output processing, the second image may be output without being divided into two.

When the function of the output processing portion 34 is set to be effective by the setting processing portion 31, the notification processing portion 35 notifies a message that notifies guidance of the function of the output processing portion 34.

For example, when the function of the output processing portion 34 is set to be effective by the setting processing portion 31, the notification processing portion 35 causes the operation display portion 5 to display a first message and a second message.

For example, the first message is a message notifying to the effect that, by an input of an instruction to execute the image reading processing in a state where the ADF 1 is in the opened state without designating the size of the double-page document sheet X10, the tilt of each of the page images read from the double-page document sheet X10 can be corrected.

In addition, the second message is a message notifying to the effect that, by an input of the instruction to execute the image reading processing in the state where the ADF 1 is in the opened state after designating the size of the double-page document sheet X10, erroneous detection of the size of the double-page document sheet X10 due to light that enters the first contact glass 211 from outside can be avoided.

It is noted that the first message may include a message notifying to the effect that the size of the double-page document sheet X10 may be erroneously detected due to light that enters the first contact glass 211 from outside. Moreover, the second message may include a message notifying to the effect that each of the page images read from the double-page document sheet X10 may be tilted.

### [Double-page document sheet reading processing]

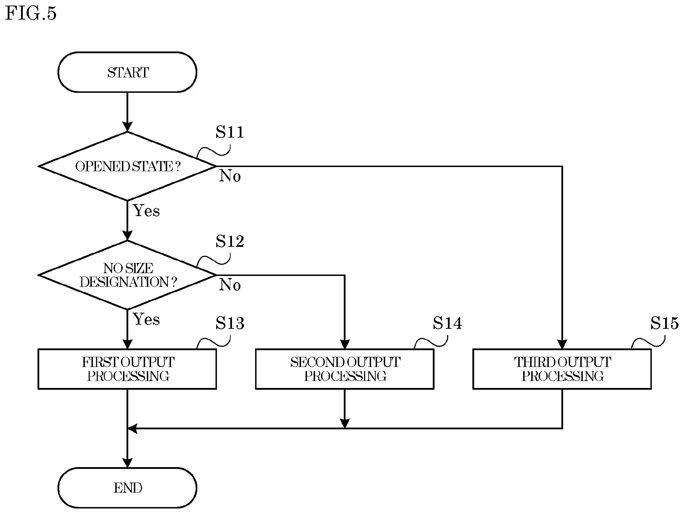

Hereinafter, with reference to Fig. 5, an image reading method according to the present disclosure will be described along with exemplary procedures of the double-page document sheet reading processing executed by the control portion 7 in the image forming apparatus 100. Herein, Step S11, Step S12, ... represent numbers of processing procedures (steps) executed by the control portion 7. It is noted that the double-page document sheet reading processing is executed when the instruction to execute the image reading processing is input in a state where the function of the output processing portion 34 is set to be effective.

It is noted that when a predetermined user operation is made to the operation display portion 5 before execution of the double-page document sheet reading processing, the designation operation is accepted by the acceptance processing portion 32. Herein, the processing of accepting the designation operation is an example of an acceptance step according to the present disclosure.

### <Step S11>

First, in Step S11, the control portion 7 determines whether or not the ADF 1 is in the opened state.

Herein, when determining that the ADF 1 is in the opened state (Yes in S11), the control portion 7 shifts the processing to Step S12. On the other hand, when determining that the ADF 1 is not in the opened state (No in S11), the control portion 7 shifts the processing to Step S15.

### <Step S12>

In Step S12, the control portion 7 determines whether or not the size of the document sheet has been designated by the designation operation. Herein, the processing of Step S11 and Step S12 is an example of a determination step according to the present disclosure and is executed by the determination processing portion 33 of the control portion 7.

Herein, when determining that the size of the document sheet has been designated by the designation operation (No in S12), the control portion 7 shifts the processing to Step S14. On the other hand, when determining that the size of the document sheet has not been designated by the designation operation (Yes in S12), the control portion 7 shifts the processing to Step S13.

### <Step S13>

In Step S13, the control portion 7 executes the first output processing.

### <Step S14>

In Step S14, the control portion 7 executes the second output processing. Herein, the processing of Step S13 and Step S14 is an example of an output step according to the present disclosure and is executed by the output processing portion 34 of the control portion 7.

### <Step S15>

In Step S15, the control portion 7 executes third output processing.

Herein, the third output processing is processing of reading an image of a third region in the first contact glass 211, that corresponds to a size detected by size detection processing that is executed in advance, and dividing a third image obtained by the reading into two and outputting them. The size detection processing is executed when the attitude of the ADF 1 changes from the opened attitude to the closed attitude. Specifically, in the size detection processing, the reading unit 22 is used to read an image corresponding to one or a plurality of lines in the main-scanning direction D1, and the size of the document sheet is detected based on the read image.

It is noted that in Step S11, the control portion 7 may determine whether or not the ADF 1 is in the opened state based on whether or not the size detection processing has been executed.

In this manner, in the image forming apparatus 100, when it is determined by the determination processing portion 33 that the size of the document sheet has not been designated, the first output processing for reading the image of the first region in the first contact glass 211, correcting the tilt of each of the page images included in the read first image, and clipping the document sheet region from the corrected first image and outputting the document sheet region is executed. Further, in the image forming apparatus 100, when it is determined by the determination processing portion 33 that the size of the document sheet has been designated, the second output processing for reading the image of the second region in the first contact glass 211, that corresponds to the size designated by the designation operation, and outputting the read second image is executed. Thus, when the user prioritizes avoidance of the tilt of each of the page images read from the double-page document sheet X10 in the case where the image forming apparatus 100 is caused to read the image of the double-page document sheet X10, it is possible to cause the image forming apparatus 100 to execute the first output processing. Moreover, when the user prioritizes avoidance of erroneous detection of the size of the double-page document sheet X10 in the case where the image forming apparatus 100 is caused to read the image of the double-page document sheet X10, it is possible to cause the image forming apparatus 100 to execute the second output processing. Accordingly, it is possible to suppress a situation where the image read from the double-page document sheet X10 becomes an image unintended by the user.

Further, in the first output processing, the document sheet region clipped from the corrected first image is divided into two and output, and in the second output processing, the second image is divided into two and output. Thus, the image included in the double-page document sheet X10 can be read in page units.

### [Notes of disclosure]

Hereinafter, a general outline of the disclosure extracted from the embodiment described above will be noted. It is noted that the respective configurations and processing functions described in the notes below can be sorted and arbitrarily combined as appropriate.

### <Note 1 >

An image reading device, including: a document sheet placing portion on which a document sheet is placed; a cover portion provided while being capable of changing its attitude between a closed attitude in which the cover portion covers the document sheet placing portion and an opened attitude in which the cover portion exposes the document sheet placing portion; an acceptance processing portion which accepts a designation operation for designating a size of the document sheet placed on the document sheet placing portion; a determination processing portion which determines whether or not the size of the document sheet has been designated by the designation operation when an instruction to read an image of the document sheet placed on the document sheet placing portion is input and the cover portion is in the opened attitude; and an output processing portion which executes, when it is determined by the determination processing portion that the size of the document sheet has not been designated, first output processing for reading an image of a predetermined first region in the document sheet placing portion, correcting a tilt of each of page images included in a first image obtained by the reading, and clipping a document sheet region from the corrected first image and outputting the document sheet region, and executes, when it is determined by the determination processing portion that the size of the document sheet has been designated, second output processing for reading an image of a second region in the document sheet placing portion, that corresponds to the size designated by the designation operation, and outputting a second image obtained by the reading.

### <Note 2>

The image reading device according to note 1, in which in the first output processing, the document sheet region clipped from the corrected first image is divided into two and output, and in the second output processing, the second image is divided into two and output.

### <Note 3>

The image reading device according to note 1 or 2, further including: a setting processing portion which sets a function of the output processing portion to be effective or ineffective according to an operation of a user; and a notification processing portion which notifies, when the function of the output processing portion is set to be effective by the setting processing portion, a message that notifies guidance of the function of the output processing portion.

### <Note 4>

An image forming apparatus, including: the image reading device according to any one of notes 1 to 3; and an image forming portion which forms an image on a sheet based on an image read by the image reading device.

### <Note 5>

An image reading method executed in an image reading device including a document sheet placing portion on which a document sheet is placed and a cover portion provided while being capable of changing its attitude between a closed attitude in which the cover portion covers the document sheet placing portion and an opened attitude in which the cover portion exposes the document sheet placing portion, the image reading method including: an acceptance step of accepting a designation operation for designating a size of the document sheet placed on the document sheet placing portion; a determination step of determining whether or not the size of the document sheet has been designated by the designation operation when an instruction to read an image of the document sheet placed on the document sheet placing portion is input and the cover portion is in the opened attitude; and an output step of executing, when it is determined by the determination step that the size of the document sheet has not been designated, first output processing for reading an image of a predetermined first region in the document sheet placing portion, correcting a tilt of each of page images included in a first image obtained by the reading, and clipping a document sheet region from the corrected first image and outputting the document sheet region, and executing, when it is determined by the determination step that the size of the document sheet has been designated, second output processing for reading an image of a second region in the document sheet placing portion, that corresponds to the size designated by the designation operation, and outputting a second image obtained by the reading.

It is to be understood that the embodiments herein are illustrative and not restrictive, since the scope of the disclosure is defined by the appended claims rather than by the description preceding them, and all changes that fall within metes and bounds of the claims, or equivalence of such metes and bounds thereof are therefore intended to be embraced by the claims.

## Claims

1. An image reading device, comprising:
a document sheet placing portion (211) on which a document sheet is placed;
a cover portion (1) provided while being capable of changing its attitude between a closed attitude in which the cover portion (1) covers the document sheet placing portion (211) and an opened attitude in which the cover portion (1) exposes the document sheet placing portion (211);
an acceptance processing portion (32) which accepts a designation operation for designating a size of the document sheet placed on the document sheet placing portion (211);
a determination processing portion (33) which determines whether or not the size of the document sheet has been designated by the designation operation when an instruction to read an image of the document sheet placed on the document sheet placing portion (211) is input and the cover portion (1) is in the opened attitude; and
an output processing portion (34) which executes, when it is determined by the determination processing portion (33) that the size of the document sheet has not been designated, first output processing for reading an image of a predetermined first region in the document sheet placing portion (211), correcting a tilt of each of page images included in a first image obtained by the reading, and clipping a document sheet region from the corrected first image and outputting the document sheet region, and executes, when it is determined by the determination processing portion (33) that the size of the document sheet has been designated, second output processing for reading an image of a second region in the document sheet placing portion (211), that corresponds to the size designated by the designation operation, and outputting a second image obtained by the reading.

2. The image reading device according to claim 1, wherein
in the first output processing, the document sheet region clipped from the corrected first image is divided into two and output, and
in the second output processing, the second image is divided into two and output.

3. The image reading device according to claim 1 or 2, further comprising:
a setting processing portion (31) which sets a function of the output processing portion (34) to be effective or ineffective according to an operation of a user; and
a notification processing portion (35) which notifies, when the function of the output processing portion (34) is set to be effective by the setting processing portion (31), a message that notifies guidance of the function of the output processing portion (34).

4. An image forming apparatus (100), comprising:
the image reading device according to any one of claims 1 to 3; and
an image forming portion (3) which forms an image on a sheet based on an image read by the image reading device.

5. An image reading method executed in an image reading device including a document sheet placing portion (211) on which a document sheet is placed and a cover portion (1) provided while being capable of changing its attitude between a closed attitude in which the cover portion (1) covers the document sheet placing portion (211) and an opened attitude in which the cover portion (1) exposes the document sheet placing portion (211), the image reading method comprising:
an acceptance step of accepting a designation operation for designating a size of the document sheet placed on the document sheet placing portion (211);
a determination step of determining whether or not the size of the document sheet has been designated by the designation operation when an instruction to read an image of the document sheet placed on the document sheet placing portion (211) is input and the cover portion (1) is in the opened attitude; and
an output step of executing, when it is determined by the determination step that the size of the document sheet has not been designated, first output processing for reading an image of a predetermined first region in the document sheet placing portion (211), correcting a tilt of each of page images included in a first image obtained by the reading, and clipping a document sheet region from the corrected first image and outputting the document sheet region, and executing, when it is determined by the determination step that the size of the document sheet has been designated, second output processing for reading an image of a second region in the document sheet placing portion (211), that corresponds to the size designated by the designation operation, and outputting a second image obtained by the reading.
